(19) **Europäisches Patentamt / European Patent Office / Office européen des brevets**

(11) **EP 4 679 326 A1**

(12) **EUROPEAN PATENT APPLICATION**

(43) Date of publication:
14.01.2026 Bulletin 2026/03

(21) Application number: 24187682.0

(22) Date of filing: 10.07.2024

(51) International Patent Classification (IPC):
*G06N 3/0464* [(2023.01)]  *G06N 3/067* [(2006.01)]
*G06N 3/09* [(2023.01)]  *G06N 5/01* [(2023.01)]
*G06N 7/01* [(2023.01)]  *G06N 3/048* [(2023.01)]
*G06N 3/045* [(2023.01)]

(52) Cooperative Patent Classification (CPC):
**G06N 3/0464; G06N 3/067; G06N 3/09; G06T 5/60; G06T 5/70;** G06N 3/045; G06N 3/048; G06N 5/01; G06N 7/01; G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **TOYOTA JIDOSHA KABUSHIKI KAISHA**
  **Aichi-ken, 471-8571 (JP)**
• **Rheinische Friedrich-Wilhelms-Universität Bonn**
  **53113 Bonn (DE)**

(72) Inventors:
• **FRANCESCA, Gianpiero**
  **1140 BRUSSELS (BE)**
• **BAHRAMI, Emad**
  **53115 BONN (DE)**
• **ZATSARYNNA, Olga**
  **53115 BONN (DE)**
• **GALL, Juergen**
  **53115 BONN (DE)**

(74) Representative: **Cabinet Beau de Loménie**
  **103, rue de Grenelle**
  **75340 Paris Cedex 07 (FR)**

Remarks:
Amended claims in accordance with Rule 137(2) EPC.

(54) **METHOD AND SYSTEM FOR PREDICTING PATTERNS IN FUTURE FRAMES**

(57) A computer-implemented method for predicting at least one pattern in future frames (24) that follow observed frames (22) of an input signal, comprising:
- generating a joint representation (20) of the observed frames and the future frames;
- adding noise (26) to the joint representation (20);
- generating at least one prediction (28a-28d) for the at least one pattern by denoising the joint representation through a diffusion model (30).

FIG. 1

EP 4 679 326 A1

**Description**

BACKGROUND OF THE INVENTION

1. Field of the invention

The present disclosure relates to the field of machine learning, in particular pattern prediction based on input signals. More particularly, the present disclosure relates to a system and computer-implemented method for predicting at least one pattern in future frames that follow observed frames of an input signal. The prediction system and method may find applications in all kinds of industries, including the automotive industry. For instance, the prediction system and method may be used to predict future behavior of moving people or objects in a vehicle's environment in order to adequately control the vehicle, or to monitor and support human activities in places such as a factory, e.g. for risk prevention.

2. Description of Related Art

Given an input having a sequential dimension, such as a video or more generally a temporal signal, being able to predict what the input would contain after observed frames thereof is crucial for many applications, such as autonomous driving or human-robot interaction. However, long-term predictions, where the forecast horizon goes beyond what immediately follows the observed frames, e.g. up to several minutes into the future, is a challenging task. Recently, this topic has been investigated with methods either outputting a single prediction for a single observation (deterministic operation), or assuming that the observed frames have ground-truth or pre-estimated labels. Both approaches do not take into account the uncertainty associated to the observed frames and therefore are not robust for long-term predictions.
The following references disclose various methods relating to the field of machine learning and to diffusion models.

[REF. 1] Jonathan Ho, Ajay Jain, and Pieter Abbeel. Denoising diffusion probabilistic models. Advances in Neural Information Processing Systems (NeurIPS), 2020.
[REF. 2] Jiaming Song, Chenlin Meng, and Stefano Ermon. Denoising diffusion implicit models. In International Conference on Learning Representations, 2021.
[REF. 3] Ting Chen, Ruixiang Zhang, and Geoffrey Hinton. Analog bits: Generating discrete data using diffusion models with self-conditioning. In International Conference on Learning Representations (ICLR), 2023.
[REF. 4] Hilde Kuehne, Ali Arslan, and Thomas Serre. The language of actions: Recovering the syntax and semantics of goal directed human activities. In IEEE Conference on Computer Vision and Pattern Recognition (CVPR), 2014.
[REF. 5] D. Gong, J. Lee, M. Kim, S.J. Ha, and M. Cho. Future transformer for long-term action anticipation. In IEEE Conference on Computer Vision and Pattern Recognition (CVPR), 2022.

SUMMARY

The object of the present invention is to at least substantially remedy the above-mentioned drawbacks.
In this respect, the present disclosure relates to a computer-implemented method for predicting at least one pattern in future frames that follow observed frames of an input signal, comprising:

- generating a joint representation of the observed frames and the future frames;
- adding noise to the joint representation;
- generating at least one prediction for the at least one pattern by denoising the joint representation through a diffusion model.

As used herein, for conciseness and unless the context indicates otherwise, "a", "an", and "the" are intended to refer to "at least one" or "each" and to include plural forms as well. Conversely, generic uses of the plural form may include singular elements.
For conciseness, the above method is referred to hereinafter as the prediction method.
The input signal may be obtained from a sensor, e.g. a microphone, an imaging device such as a camera, electrodes, etc. The input signal may be pre-processed as necessary to be ready for generating a joint representation and more generally for processing by the prediction method.
The input signal represents one or more patterns: that is, the contents of the frames may be such that a plurality of frames forms a pattern. For instance, a pattern may be an action in a video. The observed frames and the future frame may belong to a sequence in which the future frames follow the observed frame. The frames may be sampled at a regular or irregular frequency from the input signal.

As a further example, the sequence of frames may represent an evolution of a graph representation. A graph representation is a representation comprising at least one vertex and at least one edge, the edge connecting vertices with one another. For instance, in the case of action recognition in a video, it is possible to model a moving being by a graph representation. The vertices of the graph representation may correspond to some moving being's joints, while the edges of the graph representation may correspond to some moving being's rigid parts (e.g. bones). In other words, the graph more or less diagrammatically represents the moving being's skeleton. The graph representation (skeleton) may be generated from videos or image sequences by pose estimation techniques.

The content of the future frames (or unobserved frames) of the input signal is not known to be prediction method, and the method precisely aims to predict what pattern(s) the future frame represent. For doing so, the prediction method generates a joint representation of the observed frames and the future frames. That is, the observed frames and the future frames are encoded or otherwise transformed by a same process which leads to a consistent representation, e.g. in a latent space, of both the known portion of the input signal and the portion of the input signal to predict. Not only are the observed frames and the future frames encoded in the same latent space, but they may be encoded by a single element, namely the joint representation, in that space.

Noise is then added to the joint representation, e.g. in the form of one or more noise vectors. Then, a diffusion model, a category of machine learning models known per se in the art (e.g. [REF. 1]), is used to denoise the noised joint representation and thereby to generate at least one prediction for the at least one pattern in the future frames.

Using a joint representation for the observed frames and the future frames enables to take the uncertainty of the observation of the input signal into account similarly to the uncertainty of the future frames, and therefore provides a more robust prediction for the patterns in the future frames.

Optionally, the denoising processes the joint representation iteratively through a plurality of steps. At each step, the denoising may produce a prediction that is more and more denoised, until it leads to a final prediction.

Optionally, at least one of the plurality of steps comprises a gated temporal processing module. A gated temporal processing module is a processing module that incorporates one ore more gating mechanisms to control the flow of information. The gating mechanisms allow the module to regulate the information that passes through the module, effectively enabling it to learn complex dependencies in the data. Thus, a gated temporal processing module can differentiate between observed and future frames, although they are represented jointly, and thereby steer information flow between the observed frames and the future frames in a data-driven way. The gated temporal processing module may comprise a neural network, such as a convolutional neural network. Due to its anticipation function, as the case may be, the gated temporal processing module may be referred to as a GaTed Anticipation Network (GTAN).

The gated temporal processing module reintroduces a distinction between the observed frames and the future frames in the processing of the joint representation, and therefore enhances the performance of the denoising. A gated temporal processing module may be present in one of the successive steps of the denoising process, a plurality of the steps, or even all the steps of the denoising process.

Optionally, the gated temporal processing module comprises a plurality of blocks that are dilated with respect to one another. That is, each block takes a different temporal scale into account, for instance by having a different temporal receptive field. Dilation improves the performance of the denoising processing.

Optionally, an output of one of the plurality of steps is concatenated with the joint representation before inputting to a subsequent one of the plurality of steps. In other words, the joint representation is given as an input to each of the steps, in addition to the output of the previous step. This technique, sometimes referred to as self-conditioning, further improves the performance of the denoising process.

Optionally, the joint representation of the future frames is generated based on constant-padded frames. As the future frames are unknown by definition, constant-padded frames are a simple yet effective input for generating the joint representation. A constant-padded frame is a frame in which all the unknown variables (e.g. for an image or a video: all the pixels) have the same value, namely the constant. The constant may be zero or any other value that conveys neutral information for generating the joint representation.

Optionally, the at least one prediction comprises a plurality of predictions. For instance, a plurality of noised versions of the joint representation may be created (e.g. by adding a plurality of noise vectors to the joint representation), and each of these versions is then denoised, leading to a plurality of predictions. A plurality of predictions compensates the uncertainty associated with the observation of the observed frames, and enables to propose different consistent predictions.

Optionally, the prediction method further comprises sampling the plurality of predictions. Accordingly, the most likely prediction(s) can be output.

Optionally, the at least one pattern includes a plurality of patterns. The plurality of patterns preferably includes successively occurring patterns, although some patterns may additionally occur simultaneously to other patterns. Thus, the proposed prediction method does not predict only the first pattern following the observed frames, but also one or more patterns after the first one. The proposed prediction method thus offers robust long-term predictions, as opposed to short-term predictions which forecast a single pattern taking place in the nearest future.

Optionally, the number of the future frames is at least 20%, preferably at least 40%, preferably at least 60%, preferably at least 80% as high as the number of the observed frames. For instance, the forecast horizon may be as long as, or even longer than, the length of the input signal (measured as a number of frames). The proposed prediction method thus offers robust long-term predictions.

Optionally, the input signal is selected from a group comprising a plurality of images, a video, an audio track, an electrical signal, and a combination thereof. As mentioned above, the input signal may be obtained from an appropriate sensor.

Optionally, as mentioned above, the pattern is an action. Optionally, the pattern includes an action performed by an object or a living being. The object may be an animated object such as a robotic device or a vehicle. The living being may be a human being, an animal or a plant.

The present disclosure further relates to a system for predicting at least one pattern in future frames that follow observed frames of an input signal, the system being configured to:

- generate a joint representation of the observed frames and the future frames;
- add noise to the joint representation;
- generate at least one prediction for the at least one pattern by denoising the joint representation through a diffusion model.

The system may be configured to carry out the above-mentioned prediction method, and may have part or all of the above-described features. The device may have the hardware structure of a computer, and may comprise one or more processors configured to carry out the above recited functions.

The present disclosure is further related to a computer program set including instructions for executing the steps of the above-described prediction method when said program is executed by at least one computer. This program can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above-described method prediction method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

The present disclosure further relates to a computer-implemented method for predicting at least one pattern in future frames that follow observed frames of an input signal, comprising:

- generating a joint representation of the observed frames and the future frames;
- processing the joint representation iteratively through a plurality of steps comprising a gated temporal processing module;
- generating a prediction for the at least one pattern based on the processed joint representation.

This method may have any of the features described above in relation to the prediction method. Although not necessarily based on a denoising process, this method provides deterministic predictions that still outperforms prior art methods, thanks to generating a joint representation of the observed frames and the future frames.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a block diagram showing an overview of a prediction system according to an embodiment.
- FIG.2 is a block diagram showing a detail of an iterative denoising process according to an embodiment.
- FIG. 3 is a block diagram showing a detail of a gated temporal processing module according to an embodiment.
- FIG. 4 illustrates a performance comparison between the proposed prediction method according to an embodiment and a prior art prediction method, in the case of action prediction from videos.

DETAILED DESCRIPTION OF EMBODIMENTS

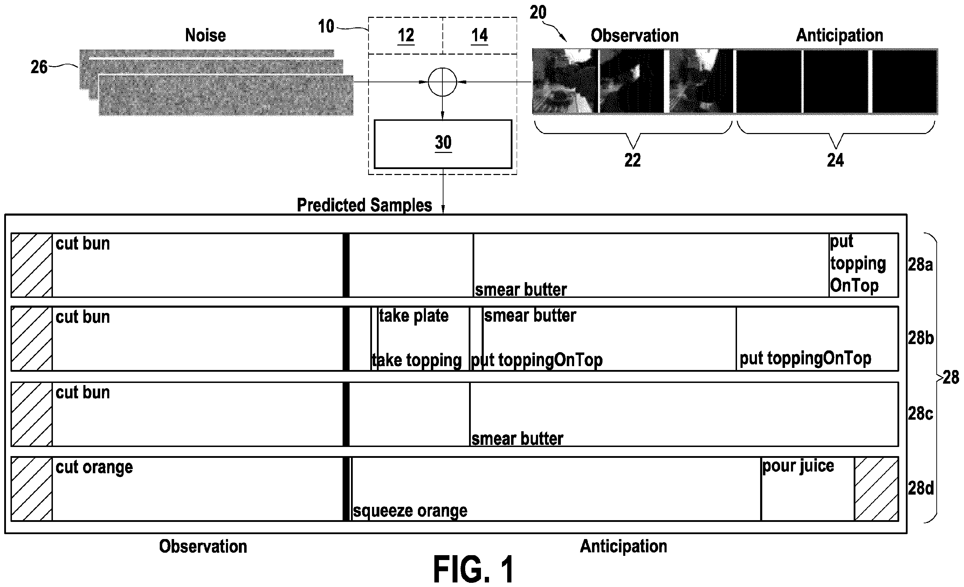

Figure 1 illustrates a prediction system 10 according to an embodiment. The prediction system 10 may have the hardware structure of a computer. The prediction system 10 may comprise a processor 12 (shared, dedicated, or group) and a memory 14, and/or other suitable components that provide the described functionality. In particular, inputs and/or outputs may be provided as desired, e.g. an input to receive an inputs signal or observed frames thereof, and an output to output at least one prediction for patterns in future frames.

The memory 14 of the generation module 10 may form a recording medium readable by at least one computer and having recorded thereon at least one computer program including instructions for executing the steps of the prediction method defined hereinafter. Such a computer program defines functions of the prediction system 10, whereby the prediction system 10 is configured generate a joint representation 20 of observed frames 22 and future frames 24 of an input signal; add noise 26 to the joint representation 20; and to generate at least one prediction 28 (e.g. at least two predictions, e.g. four predictions 28a, 28b, 28c, 28d) for at least one pattern in the future frames 24 by denoising the joint representation through a diffusion model 30.

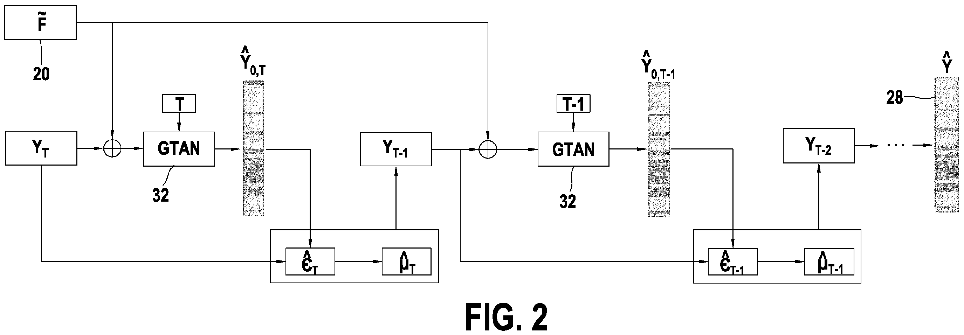

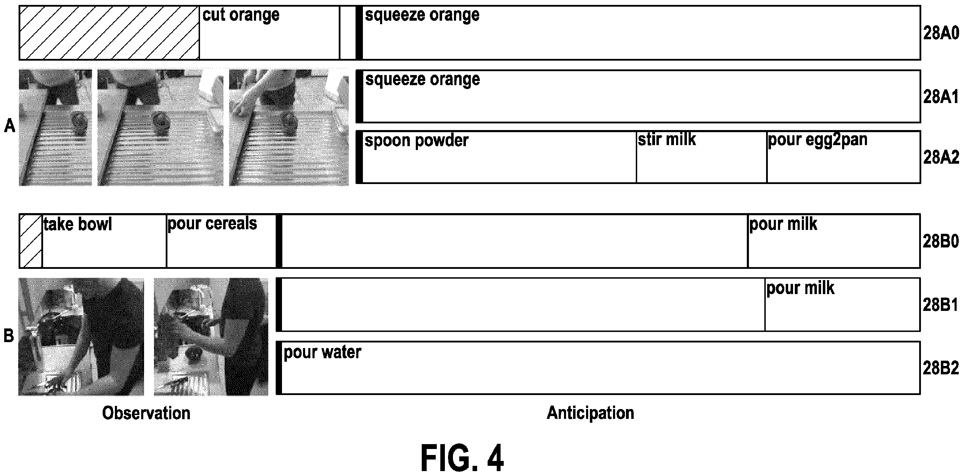

These steps and the corresponding prediction method are described in more detail with reference to Figs. 2-4. Hereinafter, an embodiment of the prediction method focuses on an application to predicting actions in a video, i.e. predicting at least one pattern in future frames that follow observed frames of an input signal, wherein each pattern corresponds to an action performed in the input signal which is a video or an output of a suitable video preprocessing. Specifically, the exemplary images and actions illustrated in Figs. 1 and 4 are based on the Breakfast dataset [REF. 4]. However, the principles explained herein can be generalized by the skilled person to other input signals than videos, other patterns than actions and other sequence dimensions than time. For example, the input signal may be selected from a group comprising a plurality of images, a video, an audio track, an electrical signal, etc. or a combination thereof.

Thus, the prediction method as described herein, also referred to as Gated Temporal Diffusion (GTD), is a computer-implemented method for predicting at least one pattern in future frames that follow observed frames of an input signal.

Previously proposed stochastic long-term anticipation approaches assume that the observed video segments share the same format as the future predictions, namely action labels. This assumption, however, overlooks the ambiguity inherent in certain video observations, such as insufficient context due to limited observation duration, challenging lighting conditions, occlusions, and other factors (see Fig. 1, uncertainty between "cut bun" and "cut orange"). In such cases, the estimated or pre-defined action labels fail to convey the uncertainty associated with observed frames.

To overcome this limitation, the proposed prediction method generates a joint representation 20 of the observed frames 22 and the future frames 24, in order to jointly model the uncertainty of both future and observed actions. The joint representation 20 is then noised (i.e. noise 26 is added thereto) and a diffusion model 30 denoises it to generate at least one prediction 28 for at least one pattern in the future frames 24. Diffusion models are efficient in modelling uncertainty. Due to the joint representation of the observed frames and the future frames, the patterns in the observed frames may be predicted as well, In the predictions 28a-28d, the limit between the observed frames and the future frames is marked by a thick line.

As will be detailed below, the prediction method may generate a plurality of predictions 28a-28d, which may eventually be sampled. Thus, the prediction method may be a stochastic long-term anticipation method. Before presenting this approach in more detail, the general task of stochastic long-term anticipation is formally defined below.

The observed part and the duration of the future prediction may be defined by percentages $\alpha$ and $\beta$ of the entire video. More precisely, given $\alpha|V|$ observed frames of a video with $|V|$ frames, the goal is to predict action labels for the future $\beta|V|$ frames. Accordingly, $N_o = \alpha|V|$ is the number of observed frames, $N_a = \beta|V|$ is the number of frames whose action classes are to anticipate, and $N = N_o + N_a$ is the total number of frames that are considered. Since $\beta$ can go up to 0.5 and $\beta$ may even be greater than $\alpha$ (e.g., the number of the future frames is at least 20%, preferably at least 40%, preferably at least 60%, preferably at least 80% as high as the number of the observed frames, or more), the prediction duration can be very long. While deterministic approaches make only a single most likely future prediction, stochastic approaches consider the uncertainty of the future modelling and generate multiple ($M > 1$) future predictions (samples).

Formally, the task of stochastic long-term anticipation can be formulated as learning to draw samples from the underlying joint probability of per-frame future actions conditioned on the observed video frames:

$$\hat{Y}^{N_o+1:N} \sim p_\theta(Y^{N_o+1}, ..., Y^N|F) \tag{1}$$

$$F = (\phi(x^1), ..., \phi(x^{N_o})) \in \mathbb{R}^{N_o \times D}, \tag{2}$$

where $x^k$ is the $k^{th}$ input frame, $\Phi$ is a feature extractor network, $Y^i$ is the action variable corresponding to $i^{th}$ frame and $Y^{i:j}$

denotes a sequence of variables for frame *i* to *j*.

Since the present prediction method additionally models the uncertainty present in the observed frames, the prediction method instead learns to sample $\hat{Y} = \hat{Y}^{1:N}$ from the conditional joint distribution of both future and observed actions.

To model uncertainty and perform stochastic action anticipation, the prediction method relies on a diffusion model 30 as illustrated in Fig. 1. While the standard diffusion model, described below, serves as a foundation, long-term action anticipation is more efficiently carried out by a novel diffusion model 30 that preserves the inherent difference between the observed and unobserved frames although they have been jointly modelled.

**Diffusion model**

Diffusion models learn to map noise samples $Y_T \sim \mathcal{N}(\mathbf{0}, \mathbf{I})$ to the samples from the data distribution $Y_0 \sim q(Y)$ in an iterative manner using a reverse Markov chain process $p_\theta(Y_{0:T})$ with learnable transition parameters $\theta$:

$$p_\theta(Y_{0:T}) = p_\theta(Y_T) \prod_{t=1}^{T} p_\theta(Y_{t-1}|Y_t), \quad p_\theta(Y_{t-1}|Y_t) \\ = \mathcal{N}(Y_{t-1}; \mu_\theta(Y_t, t), \Sigma(t)). \tag{3}$$

To learn these parameters, a forward Markov process is defined. It specifies the transitions in the inverse direction by adding Gaussian noise to the data according to a fixed variance schedule $\beta_1, ..., \beta_T$:

$$q(Y_{1:T}|Y_0) = \prod_{t=1}^{T} q(Y_t|Y_{t-1}), \quad q(Y_t|Y_{t-1}) = \mathcal{N}(Y_t; \sqrt{1 - \beta_t} Y_{t-1}, \beta_t \mathbf{I}). \tag{4}$$

Training, i.e. optimization of diffusion models, is performed using the variational lower bound on the negative log-likelihood of the data samples where some properties of the forward process are harnessed. Given the Gaussian nature of the forward transition probabilities, one can use a reparametrization trick to draw samples directly from $Y_0$ by corrupting it following the schedule $\gamma_t$:

$$Y_t = \sqrt{\gamma_t} Y_0 + \sqrt{(1 - \gamma_t)} \epsilon_t, \tag{5}$$

where $\epsilon_t \sim \mathcal{N}(0, I)$, $\gamma_t = \prod_{k=1}^{t} \bar{\gamma}_k$ and $\bar{\gamma}_k = 1 - \beta_k$. For training, $Y_t$ is obtained using the forward process (5) at step $t \sim \mathcal{U}(1, T)$ and a denoising generator network $G_\theta(Y_t, t) = \hat{Y}_{0,t}$ is trained to reverse the noise and predict the reconstruction $\hat{Y}_{0,t}$ of $Y_0$ by minimizing the $l_2$ reconstruction error between them:

$$L_{diff} = \mathbb{E}_{t \sim \mathcal{U}(1,T), \epsilon_t \sim \mathcal{N}(0,I)} \|G_\theta(Y_t, t) - Y_0\|^2. \tag{6}$$

Once trained, sampling from the diffusion model requires following a sequence of denoising steps. In the DDPM [REF. 1] sampling procedure, inference follows $T$ denoising steps. Starting at step $t = T$, a random sample is drawn from $Y_T \sim \mathcal{N}(\mathbf{0}, \mathbf{I})$ and fed to the generator $G_\theta$ that predicts $\hat{Y}_{0,T}$. Assuming that the method has already sampled $Y_t$ and reconstructed $\hat{Y}_{0,t}$ at step $t$, the next sample $Y_{t-1}$ can be generated by first approximating $\epsilon_t$ by:

$$\hat{\epsilon}_t = \frac{1}{\sqrt{1 - \gamma_t}} (Y_t - \sqrt{\gamma_t} \hat{Y}_{0,t}). \tag{7}$$

Since the reverse transition probabilities $q(Y_{t-1}|Y_t, Y_0)$ become tractable when conditioned on $Y_0$ and can be expressed as Gaussians $\mathcal{N}(Y_{t-1}; \tilde{\mu}_t, \tilde{\beta}_t \mathbf{I})$, it is possible to estimate the parameters of this Gaussian by:

$$\hat{\mu}_t = \sqrt{\gamma_{t-1}}\hat{Y}_{0,t} + \sqrt{1 - \gamma_{t-1} - \tilde{\beta}_t}\hat{\epsilon}_t, \quad \tilde{\beta}_t = \frac{1 - \gamma_{t-1}}{1 - \gamma_t}\beta_t \qquad (8)$$

and sample $Y_{t-1} \sim \mathcal{N}(Y_{t-1}; \hat{\mu}_t, \tilde{\beta}_t I)$. The steps continue until $t = 1$, after which $\hat{Y}_{0,1}$ is taken as the final generated sample. For an alternative DDIM [REF. 2] sampling, variances of the transition probabilities are set to zero during inference, i.e., $\tilde{\beta}_t = 0$, making the denoising process deterministic for a particular noise sample $Y_T$. This way, $Y_{t-1}$ is equal to the mean value $Y_{t-1} = \hat{\mu}_t$. The DDIM sampling scheme performs better than DDPM if less denoising steps are used during inference compared to training [REF. 2]. For instance, between 10 and 100 denoising steps may be used, e.g. between 40 and 60 steps.

**Gated temporal diffusion for anticipation**

In contrast to previous works, the prediction method models uncertainty both in the observed frames and the future frames. Thus, the formulation described above is extended to generate one or more predictions (samples) not only for the future, but also one or more interpretations of the past as shown in Fig. 1. Since the uncertainty of the future depends on the uncertainty in the observation, the prediction method treats them as a unified sequence $\hat{Y} = \hat{Y}^{1:N}$ and models them as a joint representation 20 input to a shared diffusion model 30.

As mentioned above, the denoising may process the joint representation 20 iteratively through a plurality of steps. Figure 2 illustrates the first steps T, T-1 of an iterative denoising process carried out by the diffusion model 30. As mentioned above, the diffusion model 30 may carry out the denoising process by relying on at least one gated temporal processing module 32, in order to take into account a distinction between observed and future action variables in the joint representation. The gated temporal processing module 32 may comprise a GTAN generator network, e.g. used as the above-mentioned denoising generator network $G_\theta$. This network may employ gated temporal convolutions and, on one hand, models observed and unobserved data jointly, while, on the other hand, steers the information flow between past and future entries with the learnable gates, thereby controlling their fusion.

To model discrete action categories using continuous state diffusion, action labels may be represented as one-hot encoded vectors $Y_0 \in \mathbb{R}^{N \times C}$ and regarded as "analog bits" [REF. 3] that can be directly modelled by continuous state diffusion models. In this way, training remains unchanged and the inference process also remains the same, except that the generated predictions may be mapped back to the discrete domain by applying any suitable operation (e.g. the *argmax* operation) over the class dimension.

To condition the generation on the observed frames, frame-wise feature vectors $F$ (Eq. 2) are used and adapted to act as the per-frame condition for both observed and future action variables. More specifically, the joint representation of the future frames may be generated based on constant-padded frames. That is, the frame-wise feature vector $F$ obtained based on the observed frames may be expanded by incorporating constant-padding (e.g. zero-padding) to compensate for the absent features of the future unobserved frames:

$$\hat{Y} \sim p_\theta(Y|\tilde{F}), \quad \tilde{F} = (\phi(x^1), ..., \phi(x^{N_o}), \mathbf{0}, ..., \mathbf{0}) \in \mathbb{R}^{N \times D}. \qquad (9)$$

In this way, the resulting vector $\tilde{F}$ can be used to condition the per-frame diffusion generation process. To this end, the padded observed frame features $\tilde{F} \in \mathbb{R}^{N \times D}$ are channel-wise concatenated to the current sample $Y_t \in \mathbb{R}^{N \times C}$ at each step $t$; that is, an output of one of the plurality of steps is concatenated with the joint representation before inputting to a subsequent one of the plurality of steps.

Furthermore, self-conditioning is employed by using the previous estimate $\hat{Y}_{0,t+1} \in \mathbb{R}^{N \times C}$ as additional input for the generator $G_\theta$:

$$G_\theta(Y_t, \hat{Y}_{0,t+1}, \tilde{F}, t) = \hat{Y}_{0,t} \in \mathbb{R}^{N \times C}, \qquad (10)$$

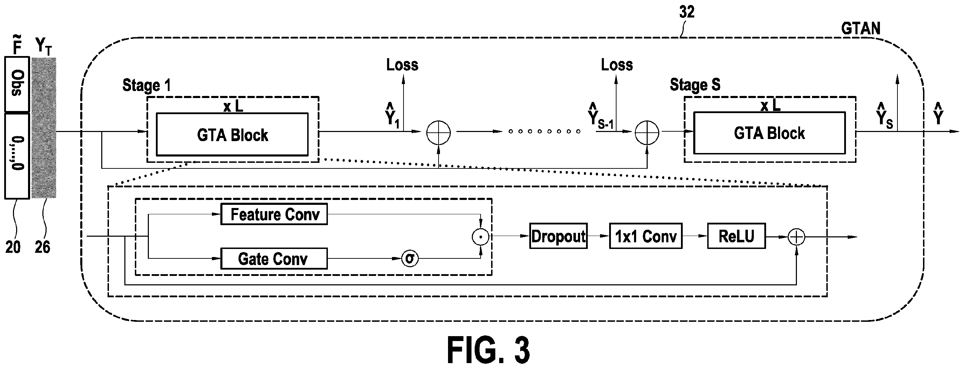

where during training $\hat{Y}_{0,t+1}$ may be randomly set to zero with probability p, which is then equivalent to training $G_\theta$ without self-conditioning. While $Y_t$, $\hat{Y}_{0,t+1}$, and $\tilde{F}$ are concatenated and used as input to the generator $G_\theta$, shown in Fig. 3 which shows the GTAN generator network in more detail, at each diffusion step $t$, the step $t$ is encoded as sinusoidal positional embedding.

With reference to Fig. 3, to model temporal dependencies in the input, temporal convolutional layers may be used for the generator network $G_\theta$. As the input sequence to the generator network comprises two distinct parts (observed and unobserved), directly applying the network with classical temporal convolution layers is sub-optimal since the distinction between observed and future parts would not be possible, leading to all values being treated equally. Instead, gated convolutions enable the generator network to adaptively decide how much mixing between the past and future occurs at different levels of the network.

While Fig. 3 depicts a proposed architecture for the gated temporal processing module 32, other architectures are possible that use gating too. As shown in Fig. 3, in an example, the GTAN generator network may comprise S stages (e.g. between 1 and 10 stages, e.g. between 3 and 6 stages) that produce output vectors of action probabilities over C classes. Each stage may comprise L residual GTA blocks, e.g. between 5 and 15, preferably between 8 and 11, preferably 9 or 10 blocks, as shown in Fig. 3. Each GTA block may include at least two dilated temporal convolutional layers: one for feature processing *(feature convolution)* and another for gating the features *(gate convolution).* Formally, given a feature vector as input, both layers are applied to it separately with the same dilation rate, kernel size, and number of channels. The layers are then combined by the element-wise product between the output of the feature convolution and the sigmoid-activated output of the gate convolution. Given the input feature $\tilde{H}_{s,l-1}$, the output $\overline{H}_{s,l}$ of the gated convolution at layer $l$ and stage s is computed as follows:

$$\bar{H}_{s,l} = \sigma(W_g * \tilde{H}_{s,l-1} + b_g) \odot (W_f * \tilde{H}_{s,l-1} + b_f), \tag{11}$$

where $\sigma$ is the sigmoid function, * denotes the convolution operator, and $\odot$ denotes the element-wise product. $W_g$ and $W_f$ are weights of the convolutional filters and $b_g$ and $b_f$ are biases for gate and feature convolutions, respectively. The output $\overline{H}_{s,l}$ is then passed through a dropout layer and then to a $1 \times 1$ convolutional layer followed by an activation function, e.g. the ReLU non-linearity. Finally, the output of the layer $l$ is computed by applying a residual connection after the ReLU. At each layer $l$, the dilation factor for the gate and feature convolution is set to $2^l$, it increases by a factor of two with each layer. More generally, the plurality of GTA blocks are dilated with respect to one another, e.g. from one layer $l$ to another within the same stage $s$.

Ablation studies have shown the benefits of gating and specifically learning temporal gates in a data-driven way, as opposed to using manual masks or channel-wise gating without the temporal component. In particular, the gating mechanism dynamically adapts while manual masks are fixed.

**Training and inference**

For training the proposed Gated Temporal Diffusion model 30, one may sample step $t \sim \mathcal{U}(1, T)$ and $Y_t$ (5) for a given observation $\tilde{F}$ (Eq. (9)) with ground-truth $Y_0$. Then, the proposed GTAN generator $G_\theta(Y_t, hatY_{S,0,t+1}, \tilde{F}, t)$ produces a set of stage-wise predictions $\{\hat{Y}_{s,0,t}\}_{s=1}^{S}$. The self-conditioning with prediction $\hat{Y}_{S,0,t+1}$ at step $t + 1$ may be only included if $t < T$. The diffusion model 30 may be trained with the $l_2$ reconstruction loss accumulated over all S stages:

$$L_{stoch} = \mathbb{E}_{t\sim\mathcal{U}(1,T),\epsilon_t\sim\mathcal{N}(\mathbf{0},\mathbf{I})} \sum_{s=1}^{S} \| \hat{Y}_{s,0,t} - Y_0 \|^2. \tag{12}$$

However, other loss functions may be employed, such as cross-entropy loss.

During inference, the DDIM [REF. 2] sampling scheme may be applied and a subset of $D$ denoising steps may be used to get the final predictions. The reconstruction made at the denoising step $t = 1$ of the last GTAN stage $S$, i.e. , $\hat{Y} = \hat{Y}_{S,0,1}$, may be taken as the final output. As shown in Fig. 1, to generate a plurality of predictions, i.e. multiple action sequences for a given observation, the denoising process may be run starting from $M$ different noise samples 26 $\{Y_{T,m}\}_{m=1}^{M}$, which are then reconstructed into distinct predictions $\{\hat{Y}_m\}_{m=1}^{M}$, where $\{\hat{Y}_m^{N_o+1:N}\}_{m=1}^{M}$ are the future action predictions.

Although the prediction method relies on a diffusion model 30 in the context of stochastic long-term anticipation, the proposed gated temporal processing module 32 may also be used on its own, without the diffusion process, to generate deterministic predictions. Given $\tilde{F}$ as the input sequence, the gated temporal processing module 32 produces intermediate $\{\hat{Y}_s\}_{s=1}^{S-1}$ and final $\hat{Y} = \hat{Y}_S$ predictions. Using these predictions, the network, namely the GTAN, may be trained using standard cross-entropy loss applied to all stages and frames:

$$L_{determ} = -\sum_{s=1}^{S}\sum_{n=1}^{N} Y^n \log \hat{Y}_s^n,\qquad (13)$$

where $Y^n \in \mathbb{R}^C$ is the one-hot encoded ground-truth action at frame n. During inference, only predictions for the future frames may be considered.

Experiments have been conducted, e.g. on the Breakfast dataset [REF. 4], and showed that the proposed method outperforms state-of-the-art methods. Examples are illustrated in Fig. 4 for two tasks A and B. The ground-truth labels are denoted as 28A0 and 28B0 respectively. Predictions from the proposed prediction method, in a deterministic setting, are denoted as 28A1 and 28B1 respectively. Predictions 28A2 and 28B2 are obtained with another method known as FUTR [REF. 5]. As can be seen qualitatively, even in the deterministic setting, the proposed prediction method shows a substantial improvement for long-term predictions as compared to FUTR, which was regarded as the previously best performing method.

In the stochastic approach, predictions 28a-28d in Fig. 1 show the ability of the method to take account of the uncertainty of the observed frames in order to predict a consistent sequence of actions even for long-term horizons.

This is particularly relevant when the observed frames contain actions that are generic to several high-level activities: in a first example, the action sequence involves the high-level activity 'Scrambled Eggs'. However, the observed part of the sequence contains only the action 'Butter Pan', shared with another high-level class, 'Fry Eggs'. Thus, based solely on observed frames, distinguishing the underlying activity is challenging. The proposed prediction method predicts sequences belonging to either 'Scrambled Eggs' or 'Fry Eggs', demonstrating ambiguity in order, length, and presence/absence of actions within categories.

In a second example, the ground-truth activity is 'Cereals' but poor lighting conditions make recognizing actions in the observed segment difficult and ambiguous. Consequently, the prediction method classifies observed actions differently across samples, leading to consistent yet different predictions. By addressing uncertainty in observations, the prediction method produces correct predictions despite the poor quality of the observed segment.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for predicting at least one pattern in future frames (24) that follow observed frames (22) of an input signal, comprising:

   - generating a joint representation (20) of the observed frames and the future frames;
   - adding noise (26) to the joint representation (20);
   - generating at least one prediction (28a-28d) for the at least one pattern by denoising the joint representation through a diffusion model (30).

2. The method of claim 1, wherein the denoising processes the joint representation iteratively through a plurality of steps.

3. The method of claim 2, wherein at least one of the plurality of steps comprises a gated temporal processing module (32).

4. The method of claim 3, wherein the gated temporal processing module (32) comprises a plurality of blocks that are dilated with respect to one another.

5. The method of any one of claims 2 to 4, wherein an output of one of the plurality of steps is concatenated with the joint representation (20) before inputting to a subsequent one of the plurality of steps.

6. The method of any one of claims 1 to 5, wherein the joint representation (20) of the future frames is generated based on constant-padded frames.

7. The method of any one of claims 1 to 6, wherein the at least one prediction comprises a plurality of predictions (28a-28d), and the method optionally further comprises sampling the plurality of predictions.

8. The method of any one of claims 1 to 7, wherein the at least one pattern includes a plurality of patterns.

9. The method of any one of claims 1 to 8, wherein the number of the future frames is at least 20%, preferably at least 40%, preferably at least 60%, preferably at least 80% as high as the number of the observed frames.

10. The method of any one of claims 1 to 9, wherein the input signal is selected from a group comprising a plurality of images, a video, an audio track, an electrical signal, and a combination thereof.

11. The method of any one of claims 1 to 10, wherein the pattern is an action.

12. A system (10) for predicting at least one pattern in future frames (24) that follow observed frames (22) of an input signal, the system being configured to:

   - generate a joint representation (20) of the observed frames (22) and the future frames (24);
   - add noise (26) to the joint representation;
   - generate at least one prediction (28a- 28d) for the at least one pattern by denoising the joint representation through a diffusion model (30).

13. A computer program set including instructions for executing the steps of the method of any one of claims 1 to 11 when said program set is executed by at least one computer.

14. A recording medium readable by at least one computer and having recorded thereon at least one computer program including instructions for executing the steps of the method of any one of claims 1 to 11.

**Amended claims in accordance with Rule 137(2) EPC.**

1. A computer-implemented method for predicting at least one pattern, formed by a plurality of frames, in future frames (24) that follow observed frames (22) of an input signal selected from a group comprising a plurality of images, a video, an audio track, an electrical signal, and a combination thereof, comprising:

   - generating a joint representation (20) of the observed frames and the future frames;
   - adding noise (26) to the joint representation (20);
   - generating at least one prediction (28a-28d) for the at least one pattern by denoising the joint representation through a diffusion model (30).

2. The method of claim 1, wherein the denoising processes the joint representation iteratively through a plurality of steps.

3. The method of claim 2, wherein at least one of the plurality of steps comprises a gated temporal processing module (32).

4. The method of claim 3, wherein the gated temporal processing module (32) comprises a plurality of blocks that are dilated with respect to one another.

5. The method of any one of claims 2 to 4, wherein an output of one of the plurality of steps is concatenated with the joint representation (20) before inputting to a subsequent one of the plurality of steps.

6. The method of any one of claims 1 to 5, wherein the joint representation (20) of the future frames is generated based on constant-padded frames.

7. The method of any one of claims 1 to 6, wherein the at least one prediction comprises a plurality of predictions (28a-28d), and the method optionally further comprises sampling the plurality of predictions.

8. The method of any one of claims 1 to 7, wherein the at least one pattern includes a plurality of patterns.

9. The method of any one of claims 1 to 8, wherein the number of the future frames is at least 20%, preferably at least 40%, preferably at least 60%, preferably at least 80% as high as the number of the observed frames.

10. The method of any one of claims 1 to 9, wherein the generating comprising commonly encoding the observed frames (22) and the future frames (24).

11. The method of any one of claims 1 to 10, wherein the pattern is an action.

12. A system (10) for predicting at least one pattern, formed by a plurality of frames, in future frames (24) that follow observed frames (22) of an input signal selected from a group comprising a plurality of images, a video, an audio track, an electrical signal, and a combination thereof, the system being configured to:

> - generate a joint representation (20) of the observed frames (22) and the future frames (24);
> - add noise (26) to the joint representation;
> - generate at least one prediction (28a- 28d) for the at least one pattern by denoising the joint representation through a diffusion model (30).

13. A computer program set including instructions for executing the steps of the method of any one of claims 1 to 11 when said program set is executed by at least one computer.

14. A recording medium readable by at least one computer and having recorded thereon at least one computer program including instructions for executing the steps of the method of any one of claims 1 to 11.

**FIG. 1**

FIG. 2

**FIG. 3**

| | cut orange | squeeze orange | | | 28A0 |

squeeze orange — 28A1

| spoon powder | stir milk | pour egg2pan | 28A2

A

take bowl | pour cereals | | pour milk | 28B0

| | pour milk | 28B1

pour water — 28B2

B

Observation      Anticipation

FIG. 4

EP 4 679 326 A1

Europäisches
Patentamt

European
Patent Office

Office européen
des brevets

# EUROPEAN SEARCH REPORT

**Application Number**

EP 24 18 7682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG WEI ET AL: "Human Joint Kinematics Diffusion-Refinement for Stochastic Motion Prediction", ARXIV.ORG, CORNELL UNIVERSITY LIBRARY, 201 OLIN LIBRARY CORNELL UNIVERSITY ITHACA, NY 14853, 28 November 2022 (2022-11-28), XP091379417, * abstract * * page 1 - page 5 * ----- | 1-14 | INV. G06N3/0464 G06N3/067 G06N3/09  ADD. G06N5/01 G06N7/01 G06N3/048 G06N3/045 |
| X | JUNFENG HU ET AL: "Towards Unifying Diffusion Models for Probabilistic Spatio-Temporal Graph Learning", ARXIV.ORG, CORNELL UNIVERSITY LIBRARY, 201 OLIN LIBRARY CORNELL UNIVERSITY ITHACA, NY 14853, 26 October 2023 (2023-10-26), XP091645359, * abstract * * sections 1-3 * ----- | 1-14 | |
| X | HAOMIN WEN ET AL: "DiffSTG: Probabilistic Spatio-Temporal Graph Forecasting with Denoising Diffusion Models", ARXIV.ORG, CORNELL UNIVERSITY LIBRARY, 201 OLIN LIBRARY CORNELL UNIVERSITY ITHACA, NY 14853, 16 October 2023 (2023-10-16), XP091635005, * abstract * * sections 1, 3, 4 * * Appendix A.1 * ----- -/-- | 1-14 | TECHNICAL FIELDS SEARCHED (IPC)  G06N |

The present search report has been drawn up for all claims

| Place of search | Date of completion of the search | Examiner |
|---|---|---|
| The Hague | 11 December 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 679 326 A1

<table>
<tr><td colspan="2" align="center">Europäisches Patentamt<br>European Patent Office<br>Office européen des brevets</td><td align="center"><b>EUROPEAN SEARCH REPORT</b></td><td><b>Application Number</b><br>EP 24 18 7682</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIN GUANGYIN ET AL: "Adaptive Dual-View WaveNet for urban spatial-temporal event prediction",<br>INFORMATION SCIENCES, ELSEVIER, AMSTERDAM, NL,<br>vol. 588, 30 December 2021 (2021-12-30), pages 315-330, XP086939428,<br>ISSN: 0020-0255, DOI: 10.1016/J.INS.2021.12.085<br>[retrieved on 2021-12-30]<br>* abstract *<br>* sections 1, 3, 4 *<br>----- | 1-14 | |
| | | | TECHNICAL FIELDS SEARCHED (IPC) |

The present search report has been drawn up for all claims

| Place of search | Date of completion of the search | Examiner |
|---|---|---|
| The Hague | 11 December 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .....................................................................................
& : member of the same patent family, corresponding document

EPO FORM 1503 03.82 (P04C01)

page 2 of 2

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JONATHAN HO** ; **AJAY JAIN** ; **PIETER ABBEEL.** Denoising diffusion probabilistic models. *Advances in Neural Information Processing Systems (NeurIPS)*, 2020
- **JIAMING SONG** ; **CHENLIN MENG** ; **STEFANO ERMON**. Denoising diffusion implicit models. *In International Conference on Learning Representations*, 2021
- **TING CHEN** ; **RUIXIANG ZHANG** ; **GEOFFREY HINTON**. Analog bits: Generating discrete data using diffusion models with self-conditioning. *In International Conference on Learning Representations (ICLR)*, 2023
- **HILDE KUEHNE** ; **ALI ARSLAN** ; **THOMAS SERRE**. The language of actions: Recovering the syntax and semantics of goal directed human activities. *In IEEE Conference on Computer Vision and Pattern Recognition (CVPR)*, 2014
- **D. GONG** ; **J. LEE** ; **M. KIM** ; **S.J. HA** ; **M. CHO**. uture transformer for long-term action anticipation. *In IEEE Conference on Computer Vision and Pattern Recognition (CVPR)*, 2022